# EUROPÄISCHE PATENTSCHRIFT

(11) **EP 0 819 870 B1**
(45) Veröffentlichungstag und Bekanntmachung des Hinweises auf die Patenterteilung: **30.08.2000**
(21) Anmeldenummer: 97109823.1
(22) Anmeldetag: 17.06.1997
(51) Int. Cl.: F16H 61/32, F16H 63/30

(54) **Elektromechanische Schaltvorrichtung für Wechselgetriebe von Kraftfahrzeugen**
Electromechanical gearshift device for transmissions in motor vehicles
Dispositif de commande électro-mécanique pour boîtes de vitesses de véhicules

(30) Priorität: 16.07.1996 DE 19628642
(43) Veröffentlichungstag der Anmeldung: 21.01.1998
(73) Patentinhaber: Ford Global Technologies, Inc., Dearborn, Michigan 48126 (US)
(72) Erfinder: Schaller, Gerhard, 50859 Köln-Loevenich (DE); Hofmann, Harald, 50767 Köln (DE)
(74) Vertreter: Messulam, Alec Moses

(56) Entgegenhaltungen:
- EP-A- 0 620 388
- DE-B- 1 139 758
- GB-A- 2 129 509
- US-A- 4 873 881

## Beschreibung

Die Erfindung bezieht sich auf eine elektromechanische Schaltvorrichtung für Wechselgetriebe von Kraftfahrzeugen der im Oberbegriff des Patentanspruches 1 erläuterten Art.

Aus der DE-B-1 139 758 ist eine gattungsgemäße elektromechanische Schaltvorrichtung für Wechselgetriebe von Kraftfahrzeugen bekannt, bei der ein mit dem Gangschaltelement des Wechselgetriebes zusammenwirkendes Getriebeschaltglied in zwei im wesentlichen quer zueinander verlaufenden Schaltbewegungen bewegbar ist, wobei eine drehende Bewegung durch einen Elektromagneten und eine lineare Bewegung durch einen Elektromotor erzeugbar ist, der eine Betätigungswelle mit einer darauf axial bewegbar angeordneten Schiebehülse gesteuert bewegt.

Die bekannte elektromechanische Schaltvorrichtung weist den Nachteil auf, daß die radiale, die Schaltgassen bestimmende Bewegung, aus einer Neutrallage heraus nur zwei weitere Schaltgassen bedienen kann, so daß maximal eine Schaltvorrichtung mit drei Schaltgassen realisierbar ist.

Aus der DE-A-33 31 223 ist eine elektromechanische Schaltvorrichtung für Wechselgetriebe von Kraftfahrzeugen bekannt, bei der über eine elektromechanische Schaltvorrichtung in Form einer aufwendigen Getriebeanordnung, bestehend aus einem Schneckengetriebe und einem Zahnstangen/Ritzel-Getriebe eine lineare Vorwählbewegung auf ein Getriebeschaltglied aufgebracht werden kann wobei dann die Einrückbewegung durch manuelle Betätigung des Handschalthebels des Wechselgetriebes bewerkstelligt wird.

Die bekannte elektromechanische Schaltvorrichtung ist nur halbautomatisch und weist einen verhältnismäßig großen Bauaufwand durch diese Getriebeanordnung auf.

Die Aufgabe der Erfindung ist es, eine elektromechanische Schaltvorrichtung der im Oberbegriff des Patentanspruches 1 erläuterten Art derart zu verbessern, daß mit geringem elektromechanischen Bauaufwand eine Schaltvorrichtung für die üblichen drei Schaltgassen und mit nur geringem zusätzlichen Aufwand auch mehr als drei Schaltgassen geschaffen werden kann.

Gemäß der Erfindung wird diese Aufgabe gelöst, indem eine elektromechanische Schaltvorrichtung für Wechselgetriebe von Kraftfahrzeugen, der im Oberbegriff des Anspruches 1 erläuterten Art die im Kennzeichenteil des Patenanspruches 1 aufgezeigten Merkmale aufweist.

Dadurch, daß die vom Elektromotor gesteuerte drehbare Betätigungswelle die Schiebehülse über eine Keilwellenverzahnung unverdrehbar aber axial verlagerbar aufnimmt und an der Schiebehülse ein elektromagnetisch betägtigtes Vorwählglied angreift, das die Schiebehülse in unterschiedlichen axialen Lagen, den Schaltgassen entsprechend positioniert, wird mit einfachen elektromechanischen Bauteilen eine Schaltvorrichtung geschaffen, die gemäß dem Anspruch 2 mit zusätzlichen einfachen Mitteln auch mehr als drei Schaltgassen einwandfrei bedienen kann.

Das hierfür vorgesehene elektromagnetische Anschlagelement kann vorzugsweise an einer als Umlenkhebel ausgebildeten Drehscheibe angeordnet sein.

Ebenso ist eine Integration innerhalb des Magneten denkbar.

Die Erfindung wird anhand eines in der beigefügten Zeichnung aufgezeigten Ausführungsbeispieles näher erläutert. Es zeigt:

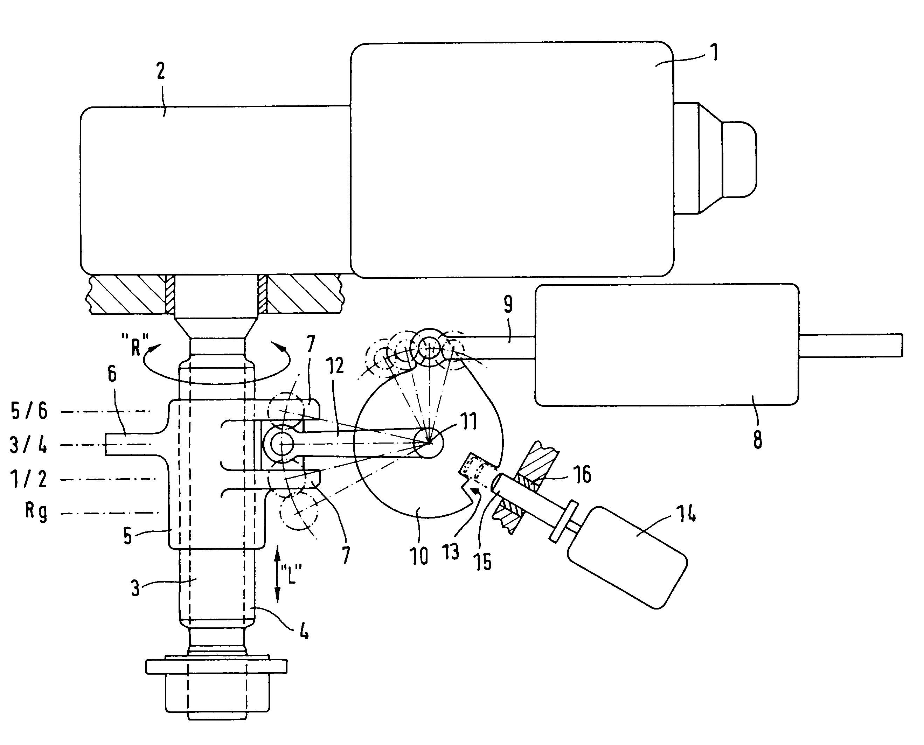

- Fig. 1: eine schematische Ansicht der elektromechanischen Schaltvorrichtung gemäß der Erfindung.

Die elektromechanische Schaltvorrichtung für Wechselgetriebe von Kraftfahrzeugen besteht im wesentlichen aus einem Elektromotor 1 mit einem Untersetzungsgetriebe 2, das eine Betätigungswelle 3 gesteuert dreht. Die Betätigungswelle 3 ist mit einer Keilwellenverzahnung 4 versehen und nimmt eine axial verschiebbare Schiebehülse 5 drehfest auf, die an einer Seite mit einem Schaltfinger 6 und auf der anderen Seite mit einer Gabel 7 zur Aufnahme eines Betätigungselementes zur axialen Verlagerung versehen ist. Ein Betätigungselement zur axialen Verlagerung besteht vorzugsweise aus einem Elektromagneten 8, dessen Anker (nicht gezeigt) mit einer Betätigungsstange 9 verbunden ist, die unmittelbar an der Gabel 7 angreifen kann.

Im vorliegenden Ausführungsbeispiel ist ein Umlenkhebel 10 in Form einer Scheibe auf einer Schwenkachse 11 angeordnet und greift mit einem Hebelarm 12 in die Gabel 7 ein.

Der Umlenkhebel in Form einer Scheibe 10 ist an seinem Umfang mit einer stufenförmigen Ausnehmung 13 versehen, die mit einem über einen Elektromagneten 14 verschiebbaren Anschlagstift 15 zusammenwirkt. Der Anschlagstift 15 kann hierbei noch in einer Führung 16 abgestützt sein.

Die Funktionsweise der erfindungsgemäßen elektromechanischen Schaltvorrichtung wird nachfolgend beschrieben:

Die Schiebehülse 5 ist in axialen Richtung frei auf der Betätigungswelle 3 beweglich und wird über den mit der Gabel 7 zusammenwirkenden Elektromagneten 8 in die gewünschten Schaltgassen nach oben oder nach unten bewegt. Die Schaltgassen sind hierbei an der linken Seite des Schaltfingers 6 mit 5/6, 3/4, 1/2 und Rg bezeichnet und entsprechen den üblichen Gängen eines Kraftfahrzeuges.

Die Drehbewegung des Elektromotors 1 wird über die Keilwellenverzahnung 4 auf die Schiebehülse 5 übertragen, um bei einer der ausgewählten Schaltgassen die entsprechende Einrückbewegung zum Schalten der jeweiligen Schaltstufen zu bewerkstelligen.

In der Schaltgasse 3/4 greift der Anschlagstift 15 in den inneren, in 1/2 den äußeren Bereich der Ausnehmung 13 in dem Umlenkhebel 10 ein, um die entsprechenden Positionen festzulegen.

Die Positionen der Schaltgassen 5/6 und Rg werden hierbei durch die inneren Anschläge des Elektromagneten 8 festgelegt.

Der Schaltvorgang aus der Schaltgasse Rg zur Schaltgasse 1/2 ist zeitlich unkritisch. Aus der Schaltposition Rg kommend, wird der Umlenkhebel 10 bis zum Anschlag der Schaltgasse 3/4 mit halb eingeschobenem Anschlagstift 15 verschwenkt. Danach bleibt der Anschlagstift 15 in seiner Position und der Umlenkhebel 10 wird bis zur Position der Schaltgasse 1/2 zurückgedreht.

Die erfindungsgemäße elektromechanische Schaltvorrichtung weist den Vorteil auf, daß für automatisierte Schaltvorrichtungen, das ansonsten notwendige Erlernen der Vorwählpositionen entfällt, da diese hier mechanisch durch den Anschlagstift 15 festgesetzt werden. Ein Feststellen der Wählpositionen durch Sensoren ist nicht mehr erforderlich wodurch die Robustheit des Systems wesentlich erhöht wird. Das Erlernen der jeweils einzustellenden Schaltendposition wird dadurch vereinfacht, daß durch das Anfahren des Schaltanschlages dieser durch Überwachen des Motorstromes erkannt werden kann.

Darüber hinaus ist eine definierte Einstellung der Schaltkraft über die Motorstromregelung leicht möglich. Durch die Integration der Regelelektronik am Aktuator, also am Elektromotor bzw. am Elektromagneten selbst werden geringe Ansprüche an externe Steuergeräte gestellt.

## Patentansprüche

1. Elektromechanische Schaltvorrichtung für Wechselgetriebe von Kraftfahrzeugen mit einem mit einem Gangschaltelement des Wechselgetriebes zusammenwirkenden, in zwei im wesentlichen quer zueinander verlaufenden Schaltbewegungen "L" und "R" bewegbaren Getriebeschaltglied (6)
**dadurch gekennzeichnet**, dass
- eine lineare Bewegung "L" des Getriebeschaltgliedes (6) durch einen Elektromagneten (8) und eine drehende Bewegung "R" durch einen Elektromotor (1) erzeugbar ist, der eine Betätigungswelle (3) mit einer darauf axial bewegbar angeordneten Schiebehülse (5) gesteuert dreht,
- die vom Elektromotor (1) gesteuert drehbare Betätigungswelle (3) mit einer Keilwellenverzahnung (4) versehen ist, und eine, eine entsprechende Innenverzahnung aufweisende Schiebehülse (5) unverdrehbar aber axial verlagerbar aufnimmt,
- die Schiebehülse (5) mit dem Getriebeschaltglied (6) versehen ist und
- an der Schiebehülse (5) über eine Gabel (7) ein über den Elektromagneten (8) betätigtes Vorwählglied (12) angreift, das die Schiebehülse (5) in unterschiedlichen axialen Lagen, die den ausgewählten Schaltgassen (5/6, 3/4, 1/2 und Rg) entsprechen positioniert.

2. Elektromechanische Schaltvorrichtung nach Anspruch 1,
**dadurch gekennzeichnet**, dass
- bei mehr als zwei Schaltgassen (5/5, 3/4, 1/2 und Rg) ein elektromechanisch betätigtes Anschlagelement (13/15) vorgesehen ist, das das Vorwählglied (12) entsprechend den anzuwählenden Schaltgassen positioniert.

3. Elektromechanische Schaltvorrichtung nach Anspruch 1,
**dadurch gekennzeichnet**, dass
- das elektromagnetisch betätigte Vorwählglied (12) über einen zweiarmigen Umlenkhebel (10) auf die axial verlagerbare Schiebehülse (5) einwirkt und
- das Anschlagelement (13/15) aus einer an den als Schaltscheibe ausgebildeten Umlenkhebel (10) am Aussenumfang angeordnete stufenförmige Ausnehmung (13) ausgebildet ist, mit der ein Anschlagstift (15) zusammenwirkt, der über einen Elektromagneten (14) gesteuert axial verlagerbar ist.

4. Elektromechanische Schaltvorrichtung nach Anspruch 1,
**dadurch gekennzeichnet**, dass
- das Anschlagelement (13/15) bestehend aus einer stufenförmigen Ausnehmung (13) und einem mit dieser zusammenwirkenden Anschlagstift (15) unmittelbar im Elektromagneten (8) für die Vorwählbewegung integriert ist.

## Claims

1. Electromechanical shifting device for gearboxes of motor vehicles with a gear shift member (6) cooperating with a gear shift element of the gearbox and movable in two shift movements "L" and "R" running substantially transverse to each other,
characterised in that
- a linear movement "L" of the gear shift member (6) can be generated by an electromagnet (8) and a rotary movement "R" by an electric motor (1) which rotates in controlled manner an actuating shaft (3) with a sliding sleeve (5) arranged in axially movable manner thereon,
- the actuating shaft (3) rotatable in controlled manner by the electric motor (1) is provided with a splined toothing (4) and receives a sliding sleeve (5), having a corresponding inner toothing, in non-rotatable but axially displaceable manner,
- the sliding sleeve (5) is provided with the gear shift member (6) and
- a pre-selection member (12) operated via the electromagnet (8) engages on the sliding sleeve (5) via a fork (7), which pre-selection member positions the sliding sleeve (5) in different positions which correspond to the selected gear passages (5/6, 3/4, 1/2, reverse).

2. Electromechanical shifting device according to Claim 1,
characterised in that
- in the case of more than two gear passages (5/6, 3/4, 1/2 and reverse) an electromechanically actuated stop element (13/15) is provided which positions the pre-selection member (12) corresponding to the gear passages to be selected.

3. Electromechanical shifting device according to Claim 1,
characterised in that
- the electromagnetically actuated pre-selection member (12) acts on the axially displaceable sliding sleeve (5) via a two-armed reversing lever (10) and
- the stop element (13/15) is formed from a step-shaped recess (13) arranged on the outer circumference on the reversing lever (10) formed as shift disk, with which recess a stop pin (15) cooperates, which is axially displaceable in controlled manner via an electromagnet (14).

4. Electromechanical shifting device according to Claim 1,
characterised in that
- the stop element (13/15) consisting of a step-shaped recess (13) and a stop pin (15) cooperating therewith is directly integrated in the electromagnet (8) for the pre-selection movement.

## Revendications

1. Dispositif de changement de vitesses électromécanique pour boîtes de vitesses de véhicules automobiles, avec un organe de commande de boîte (6) qui coopère avec un élément de commande de vitesse de la boîte de vitesses et qui peut être déplacé selon deux mouvements de commande « L » et « R » s'étendant essentiellement transversalement entre eux,
**caractérisé** en ce que
- un mouvement linéaire « L » de l'organe de commande de boîte (6) peut être produit par un électroaimant (8) et un mouvement rotatif « R » par un moteur électrique (1), qui fait tourner de façon dirigée un arbre d'actionnement (3) sur lequel un manchon coulissant (5) est disposé à déplacement axial,
- l'arbre d'actionnement (3) rotatif sous la commande du moteur électrique (1) est pourvu d'une denture cannelée (4), et reçoit sans possibilité de rotation, mais à translation axiale, un manchon coulissant (5) présentant une denture intérieure correspondante,
- le manchon coulissant (5) est pourvu de l'organe de commande de boîte (6), et
- un organe de présélection (12) actionné au moyen de l'électroaimant (8) agit sur le manchon coulissant (5) par l'intermédiaire d'une fourchette (7), et il positionne le manchon coulissant (5) dans différentes positions axiales qui correspondent aux voies de changement de vitesses choisies (5/6, 3/4, 1/2 et marche arrière)

2. Dispositif de changement de vitesses électromécanique selon la revendication 1, **caractérisé** en ce que
un élément de butée (13/15) à actionnement électromécanique, qui positionne l'organe de présélection (12) conformément aux voies de changement de vitesses à sélectionner, est prévu en présence de plus de deux voies de changement de vitesses (5/6, 3/4, 1/2 et marche arrière).

3. Dispositif de changement de vitesses électromécanique selon la revendication 1, **caractérisé** en ce que
- l'organe de présélection (12) à actionnement électromagnétique agit par l'intermédiaire d'un levier de renvoi (10) à deux bras sur le manchon coulissant (5) axialement mobile, et
- l'élément de butée (13/15) est formé par un évidement étagé (13), disposé sur la périphérie extérieure du levier de renvoi (10) conçu comme disque de commande, évidement qui coopère avec une goupille de butée (15) qui peut être déplacée axialement sous la commande d'un électroaimant (14).

4. Dispositif de changement de vitesses électromécanique selon la revendication 1, **caractérisé** en ce que
l'élément de butée (13, 15), constitué d'un évidement étagé (13) et d'une goupille de butée (15) coopérant avec cet évidement, est directement intégré dans l'électroaimant (8) pour le mouvement de présélection.
